(19) **Europäisches Patentamt**

**European Patent Office**

**Office européen des brevets**

(11) **EP 1 168 043 B1**

(12) **FASCICULE DE BREVET EUROPEEN**

(45) Date de publication et mention
de la délivrance du brevet:
**15.12.2004 Bulletin 2004/51**

(51) Int Cl.⁷: **G02F 1/133**, B60K 35/00

(21) Numéro de dépôt: **01401742.0**

(22) Date de dépôt: **29.06.2001**

(54) **Afficheur de véhicule automobile à lisibilité régulée**

Kraftfahrzeug- Anzeigegerät mit geregelter Ablesbarkeit

Display for motor vehicle with regulated readability

(84) Etats contractants désignés:
**DE ES GB IT**

(30) Priorité: **30.06.2000 FR 0008496**

(43) Date de publication de la demande:
**02.01.2002 Bulletin 2002/01**

(73) Titulaire: **Magneti Marelli Systèmes
Electroniques S.A.S
92000 Nanterre (FR)**

(72) Inventeur: **Dapremont, Olivier
95800 Cergy-Saint-Christophe (FR)**

(74) Mandataire: **Texier, Christian et al
Cabinet Régimbeau
20, rue de Chazelles
75847 Paris cedex 17 (FR)**

(56) Documents cités:
**DE-A- 4 417 990       US-A- 5 623 277**

• **PATENT ABSTRACTS OF JAPAN vol. 1999, no.
03, 31 mars 1999 (1999-03-31) & JP 10 333123 A
(CANON INC), 18 décembre 1998 (1998-12-18)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention concerne les afficheurs de véhicule automobile indiquant au conducteur des données de fonctionnement du véhicule, du type ayant une matrice d'affichage dont la lisibilité dépend de sa température.

Un exemple typique de tels afficheurs est l'afficheur à cristaux liquides à niveaux de gris.

La lisibilité de tels afficheurs dépend non seulement de la température de la matrice, mais également du voltage d'alimentation qui est appliqué à cette matrice.

On a ainsi proposé de compenser les variations de la température par des variations inverses du voltage d'alimentation.

On a proposé pour cela de mesurer la température de la matrice à l'aide d'un capteur directement placé sur une face en verre de la matrice. De tels capteurs sont particulièrement coûteux.

On a également proposé de placer un capteur sur une carte électronique espacée du verre. La température captée présente alors un écart avec la température du verre qui varie entre 0 et 20°C selon les conditions d'utilisation de l'afficheur.

Dans ce type de dispositif, on compense cette différence de température par une correction fixe : *Tverre* = *Tcapteur* - 10°*C*, mais la température du verre reste évaluée à 10°C près, ce qui est insatisfaisant.

On a également proposé d'établir une évolution-type de la température de la matrice dans une phase de début d'alimentation de l'afficheur. Connaissant une telle évolution-type, notée ci-après delta(t), cette évolution-type est mémorisée dans le dispositif d'alimentation et réutilisée à chaque initialisation de l'afficheur.

Les conditions d'utilisation de l'afficheur étant très variables, il est peu fréquent que l'évolution-type concorde avec le comportement thermique réel de l'afficheur.

L'évolution-type est par exemple inadaptée dans le cas d'un redémarrage à chaud.

Un dispositif de gestion selon le préambule de la revendication 1 et un afficheur selon le préambule de la revendication 9 sont connus du document US-A-5623277.

L'invention propose de résoudre ces inconvénients, c'est à dire de proposer un dispositif d'alimentation de matrice d'affichage à lisibilité variable qui fournisse une lisibilité satisfaisante dans une plus large gamme de conditions d'utilisation.

Ce but est atteint selon l'invention grâce à un dispositif de gestion d'alimentation de matrice d'affichage de véhicule automobile, comportant un capteur de température prévu pour être placé de manière espacée par rapport à la matrice, des moyens pour évaluer une température de la matrice à partir de la température relevée par ce capteur, caractérisé en ce que les moyens d'évaluation évaluent la température de la matrice à partir de la dérivée par rapport au temps de la température mesurée par le capteur.

On propose également un afficheur de véhicule automobile comportant une matrice d'affichage ayant une lisibilité dépendante à la fois de sa température et d'une grandeur électrique d'alimentation de cette matrice, un capteur de température placé en un endroit espacé de la matrice, un dispositif de gestion de l'alimentation électrique de la matrice, le dispositif de gestion comportant des moyens pour évaluer la température de la matrice à partir de la température prélevée par le capteur, caractérisé en ce que ces moyens d'évaluation évaluent la température de la matrice à partir de la dérivée par rapport au temps de la température prélevée par le capteur.

D'autres caractéristiques, buts et avantages de l'invention apparaîtront à la lecture de la description détaillée qui va suivre, faite en référence aux dessins annexés sur lesquels :

- la figure 1 est une vue éclatée d'une structure d'un afficheur selon l'invention ;
- la figure 2 est un schéma simplifié représentant le fonctionnement thermique de ce même afficheur ;
- la figure 3 est un schéma représentant de manière plus simplifiée encore le fonctionnement thermique de ce même afficheur ;
- la figure 4 est un tracé représentant l'évolution en fonction du temps de températures effectives et calculées dans l'afficheur des figures 1 à 3 ;
- la figure 5 est un tracé représentant l'évolution en fonction du temps de ces mêmes températures ainsi que d'une température filtrée ;
- la figure 6 représente l'évolution de ces mêmes températures dans le cas d'une réinitialisation intempestive du même afficheur ;
- la figure 7 est un diagramme représentant une suite d'étapes de traitement effectuées par des moyens d'alimentation de l'afficheur des figures 1 à 6.

Le présent afficheur est un afficheur à quatre niveaux de gris. Il comporte trois éléments principaux que sont une matrice à cristaux liquides à niveaux de gris 100, une carte électronique 200, et un boîtier 300.

La carte 200 porte un équipement de commande et d'alimentation de la matrice 100, qui inclut un capteur de température 210 et des moyens de calcul couplés à ce capteur, aptes à calculer la température du verre de la matrice 100 à partir de la température mesurée par le capteur. La carte 200 porte également une série de diodes électroluminescentes réparties autour du capteur 210.

La matrice 100 présente une face avant et une face arrière en verre, et la température de la matrice est en pratique celle du verre qui l'entoure.

La carte 200 est ici placée à environ 1,5 cm de la plaque en verre de la matrice 100.

Le boîtier 300 recouvre ici essentiellement la face arrière et les côtés de l'afficheur.

L'invention repose sur des considérations d'ordre thermique que l'on explique ci-après :

Pour cela, on adopte les notations suivantes :

- les températures du verre 100, du capteur 210 et du boîtier 300 sont notées respectivement Tv, Tc et Tb ;
- entre le verre 100 et le milieu ambiant se trouve une résistance thermique $R_2$ (résistance en face avant du verre) ;
- entre le verre 200 et le capteur 210 se trouve une résistance thermique $R_1$ (entre le verre et la carte électronique 200) ;
- on note $R_3$ la résistance thermique entre le capteur 210 (c'est à dire la carte 200) et le boîtier 300 ;
- et on note $R_4$ la résistance thermique entre le boîtier 300 et le milieu ambiant.
- le verre 100, la carte 200 et le boîtier 300 présentent des capacités thermiques notées respectivement $C_2$, $C_1$ et $C_3$:

- entre le boîtier 300 et l'ambiante prend place un flux thermique noté $P_4$ ;
- entre la carte 200 et le boîtier 300 prend place un flux thermique noté $P_3$ ;
- entre le verre 100 et la carte 200 prend place un flux thermique noté $P_1$ ;
- la carte 200 absorbe, lors d'une élévation de sa température, un flux thermique qui est noté $P_C$.

On note en outre P une puissance thermique globale dissipée par la carte 200.

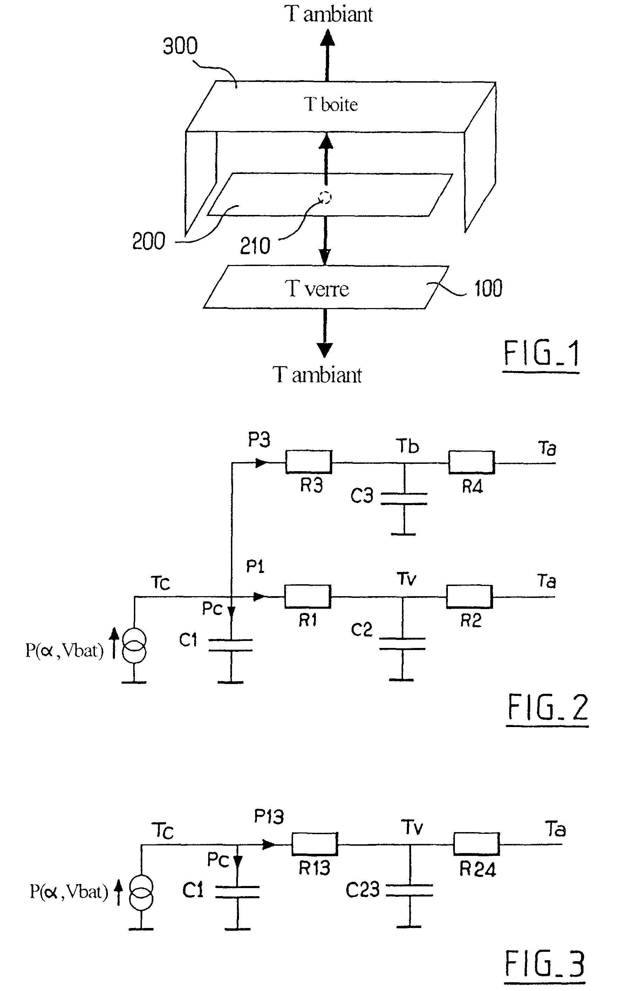

On modélise le comportement thermique de l'ensemble de ces différents éléments, comme à la figure 2, sous la forme d'un schéma électrique où les capacités thermiques des éléments sont symbolisées par des condensateurs, les températures par des potentiels, et les flux thermiques par des intensités. La puissance dissipée par la carte 200 est, elle, symbolisée par un générateur de courant.

A partir ce schéma, on a élaboré les relations suivantes :

Si l'on considère que $T_b=T_v$, alors il vient $P_1*R_1=P_3*R_3$ et l'on obtient alors, avec

$$P13=P1+P3$$

$$R13=R1 \mathbin{/\mkern-5mu/} R3 = R1R3/(R1+R3)$$

$$C23=C2+C3 = C2C3/(C2+C3)$$

$$R24=R2 \mathbin{/\mkern-5mu/} R4 = R2R4/(R2+R4),$$

$$P = P_c + P_{13}$$

$$P_c = C_1 * \frac{dT_c}{dt}$$

$$P_{13} = [\frac{T_c - T_v}{Ra} + \frac{T_c - T_v}{Rb} + \frac{T_c^4 - T_v^4}{Rc}$$

Avec
Ra : Résistance thermique de conduction
Rb : Résistance thermique de convection
Rc : Résistance thermique de rayonnement,

L'ensemble Ra+Rb+Rc étant identifié par R13 sur la figure 3.

Les températures sont exprimés en °K.
On peut développer P13 ainsi

$$P_{13} = (T_C - T_V) * [[\frac{1}{Ra} + \frac{1}{Rb} + \frac{(T_C + T_V)(T_c^2 + T_v^2)}{Rc}]$$

Comme l'afficheur peut être typiquement utilisé de 243°K (-30°C) à 358°K (+85°C) la variation est loin d'être négligeable, l'expérience montre cependant que les facteurs en $(T_C + T_V)$ sont du 2ème ordre, mais leur effet doit être pris en compte. Cela est possible en faisant l'approximation $T_C$ approximativement égal à $T_V$,

$$P_{13} = (T_C - T_V) * (\frac{1}{Rab} + \frac{8T_c^3}{Rc})$$

On estime par ailleurs ici que la puissance P dissipée par la carte dépend essentiellement de deux variables physiques que sont la tension de batterie $V_{bat}$ qui alimente l'afficheur, la carte 200 et un flux de rétroéclairage de la carte 200, noté ici $\alpha$.

Le coefficient $\alpha$ désigne donc la quantité de flux d'éclairage dégagée par les diodes électroluminescentes de la carte 200 et dans une variante, également par la matrice 100 elle-même.

$\alpha$ est mesuré à l'aide de composants électriques utilisés couramment pour mesurer une énergie électrique dissipée.

On note donc P($\alpha$, Vbat) la puissance dissipée par la carte 200.

L'équation précédente peut donc s'écrire sous la forme :

$$P(\alpha, Vbat) = c_1 * \frac{dT}{dt} + (T_c - T_v) * (\frac{1}{Rab} + \frac{8T_c^3}{Rc})$$

$$\Leftrightarrow T_v = T_c + (\frac{1}{Rab} + \frac{8T_c^3}{Rc})^{-1} * C_1 * \frac{dT_c}{dt} - (\frac{1}{Rab} + \frac{8T_c^3}{Rc})^{-1} * P(\alpha, Vbat)$$

Le terme en $\frac{8T_c^3}{Rc}$ est un 2ème ordre devant $\frac{1}{Rab}$ (autrement dit : le rayonnement est un 2ème ordre devant la conduction et la convection, cela se vérifie en pratique). C'est pourquoi on peut faire un développement limité d'ordre 1. Ce qui donne :

$$T_v = T_c + (Rab - \frac{8 * T_c^3}{Rc}) * C_1 * \frac{dT_c}{dt} - (Rab - \frac{8 * T_c^3}{Rc}) * P$$

Comme il n'y a pas de moyen de calculer Rab, Rc et C1 séparément, cette équation est plus utilisable sous la forme :

$$\Leftrightarrow T_v = T_c + K(T_c) * [a * \frac{dT_c}{dt} - b(\alpha, Vbat)]$$

où a est un chiffre positif

On identifie dans cette équation :

K(Tc) : c'est un scalaire, coefficient proche de 1 qui a pour but de modéliser la variation de la résistance thermique en fonction de Tc (apport de la partie rayonnée par rapport aux parties de conduction et de convection).

a : temps secondes, temps lié à l'inertie thermique du système.

B($\alpha$, Vbat) :degrés Kelvin, écart de température à l'équilibre thermique entre le capteur et le verre.

D'après les équations précédentes, K(Tc) est de la forme :

$$K(Tc) = K_0 + k1 * Tc^3$$

avec $k_1$, chiffre positif.

On mesure très précisément (Tc-Tv) à Vbat et $\alpha$ constant afin d'obtenir 2 valeurs de k(Tc). Si possible avec un Tc faible et un Tc fort.

Ensuite, on résout le système d'équations :

$$\begin{bmatrix} 1 & T_{c1}^3 \\ 1 & T_{c2}^3 \end{bmatrix} * \begin{bmatrix} k_0 \\ k_1 \end{bmatrix} = \begin{bmatrix} k(T_{c1}) \\ k(T_{c2}) \end{bmatrix}$$

qui a pour solution

$$\begin{bmatrix} k_0 \\ k_1 \end{bmatrix} = \begin{bmatrix} 1 & T_{c1}^3 \\ 1 & T_{c2}^3 \end{bmatrix}^{-1} * \begin{bmatrix} k(T_{c1}) \\ k(T_{c2}) \end{bmatrix}$$

On obtient par la mesure :

$$K(323°K) = 1$$
$$K(273° K) = 1,061151$$

K(323°K)=1 car c'est à cette température que l'on a obtenu les coefficients de b($\alpha$, Vbat)

D'où

$$\begin{bmatrix} k_0 \\ k_1 \end{bmatrix} = \begin{bmatrix} 1 & 33698267 \\ 1 & 20346417 \end{bmatrix}^{-1} * \begin{bmatrix} 1 \\ 1.061151 \end{bmatrix} = \begin{bmatrix} 1.15433 \\ -4.58 E - 9 \end{bmatrix}$$

Soit :

$$K(Tc) = 1.15433 - 4.58E^{-9} * Tc^3$$

Lorsque $\alpha$ et Vbat ne varient pas dans le temps et que l'on attend suffisamment longtemps pour que l'afficheur soit thermiquement stabilisé à $T_C = 30°C$, alors l'équation de comportement précédente devient alors :

$$T_v(\infty) = T_c(\infty) - b(\alpha, Vbat)$$

d'où :

$$b(\alpha, Vbat) = T_c(\infty) - T_v(\infty)$$

Cela nous donne la valeur de b pour un couple ($\alpha$, Vbat) donné.

Pour obtenir la relation entre b et le couple ($\alpha$, Vbat), on propose ici une extrapolation linéaire à partir de quelques points caractéristiques de fonctionnement.

On considère par exemple que b($\alpha$,Vbat), égal à $R_{13} * P(\alpha, Vbat)$, est proportionnel à $\alpha$, Vbat, et $Vbat^2$, d'où l'extrapolation linéaire proposée :

$$b(\alpha, Vbat) = c_0 * Vbat + c_1 * Vbat^2 + c_2 * \alpha + c_3 * \alpha * Vbat + c_4 * \alpha * Vbat^2 + c_5$$

les $c_i$ étant des coefficients fixes.

Pour calculer les six valeurs $c_i$, on mesure 6 valeurs de $b(\alpha, Vbat)$. On choisit de préférence des points $(\alpha_j, Vbat_j)$ éloignés les uns des autres, par exemple :

(Vbat fort, $\alpha$ fort), (Vbat fort, $\alpha$ petit)
(Vbat moyen, $\alpha$ fort), (Vbat moyen, $\alpha$ petit)
(Vbat petit, $\alpha$ fort), (Vbat petit, $\alpha$ petit)

Ensuite on résout le système d'équation suivant :

$$\begin{bmatrix} Vbat_0 & Vbat_0^2 & \alpha_0 & \alpha_0 * Vbat_0 & \alpha_0 * Vbat_0^2 & 1 \\ Vbat_1 & Vbat_1^2 & \alpha_1 & \alpha_1 * Vbat_1 & \alpha_1 * Vbat_1^2 & 1 \\ Vbat_2 & Vbat_2^2 & \alpha_2 & \alpha_2 * Vbat_2 & \alpha_2 * Vbat_2^2 & 1 \\ Vbat_3 & Vbat_3^2 & \alpha_3 & \alpha_3 * Vbat_3 & \alpha_3 * Vbat_3^2 & 1 \\ Vbat_4 & Vbat_4^2 & \alpha_4 & \alpha_4 * Vbat_4 & \alpha_4 * Vbat_4^2 & 1 \\ Vbat_5 & Vbat_5^2 & \alpha_5 & \alpha_5 * Vbat_5 & \alpha_5 * Vbat_5^2 & 1 \end{bmatrix} * \begin{bmatrix} c_0 \\ c_1 \\ c_2 \\ c_3 \\ c_4 \\ c_5 \end{bmatrix} = \begin{bmatrix} b(\alpha_0, Vbat_0) \\ b(\alpha_1, Vbat_1) \\ b(\alpha_2, Vbat_2) \\ b(\alpha_3, Vbat_3) \\ b(\alpha_4, Vbat_4) \\ b(\alpha_5, Vbat_5) \end{bmatrix}$$

D'où:

$$\begin{bmatrix} c_0 \\ c_1 \\ c_2 \\ c_3 \\ c_4 \\ c_5 \end{bmatrix} = \begin{bmatrix} Vbat_0 & Vbat_0^2 & \alpha_0 & \alpha_0 * Vbat_0 & \alpha_0 * Vbat_0^2 & 1 \\ Vbat_1 & Vbat_1^2 & \alpha_1 & \alpha_1 * Vbat_1 & \alpha_1 * Vbat_1^2 & 1 \\ Vbat_2 & Vbat_2^2 & \alpha_2 & \alpha_2 * Vbat_2 & \alpha_2 * Vbat_2^2 & 1 \\ Vbat_3 & Vbat_3^2 & \alpha_3 & \alpha_3 * Vbat_3 & \alpha_3 * Vbat_3^2 & 1 \\ Vbat_4 & Vbat_4^2 & \alpha_4 & \alpha_4 * Vbat_4 & \alpha_4 * Vbat_4^2 & 1 \\ Vbat_5 & Vbat_5^2 & \alpha_5 & \alpha_5 * Vbat_5 & \alpha_5 * Vbat_5^2 & 1 \end{bmatrix}^{-1} * \begin{bmatrix} b(\alpha_0, Vbat_0) \\ b(\alpha_1, Vbat_1) \\ b(\alpha_2, Vbat_2) \\ b(\alpha_3, Vbat_3) \\ b(\alpha_4, Vbat_4) \\ b(\alpha_5, Vbat_5) \end{bmatrix}$$

On obtient ici par la mesure :

b(10.49V, 0.208) )=9.5
b(10.49V, 0.63)=16.4
b(13V, 0.122)=11.1
b(13V, 0.37)=19.1
b(15.5, 0.262)=21.5
b(15,47, 0087)=12.3

d'où :

$$\begin{bmatrix} c_0 \\ c_1 \\ c_2 \\ c_3 \\ c_4 \\ c_5 \end{bmatrix} = \begin{bmatrix} 10.49 & 110.04 & 0.208 & 2.1819 & 22.888 & 1 \\ 10.49 & 110.04 & 0.63 & 6.6087 & 69.325 & 1 \\ 13 & 169 & 0.122 & 1.586 & 20.618 & 1 \\ 13 & 169 & 0.37 & 4.81 & 23.136 & 1 \\ 15.5 & 240.25 & 0.262 & 4.061 & 62.945 & 1 \\ 15.47 & 239.32 & 0.087 & 1.3459 & 20.821 & 1 \end{bmatrix}^{-1} * \begin{bmatrix} 9.5 \\ 16.4 \\ 11.1 \\ 19.1 \\ 21.5 \\ 12.3 \end{bmatrix} = \begin{bmatrix} 0.23057 \\ -3.96288E-3 \\ -57.0153 \\ 6.85699 \\ 1.3048E-2 \\ 3.2445 \end{bmatrix}$$

soit :

$$b(\alpha, Vbat) = 0{,}2306 * Vbat + 0.003963 * Vbat^2 - 57.02 * \alpha + 6.857 * \alpha * Vbat + 0.01305 * \alpha * Vbat^2 + 3.245$$

Une telle évolution linéaire s'est avérée particulièrement fidèle au comportement effectif de l'afficheur.

Pour évaluer la valeur de a, on laisse l'afficheur éteint suffisamment longtemps pour que $T_C = T_V = 298°K$. Lorsque l'on allume ensuite l'afficheur, on a alors :

$$0 = a * \frac{dT_c}{dt}(0) - b(\alpha, Vbat)$$

D'où :

$$a = \frac{b(\alpha, Vbat)}{\frac{dT_c}{dt}(0)}$$

Par la suite a est affiné en confrontant les valeurs mesurées aux valeurs calculées.

Les moyens de calcul du présent afficheur déterminent $\frac{dT_c}{dt}$ en relevant la température $T_C$ à deux instants successifs séparés d'un intervalle de temps prédéterminé (pas temporel), et en divisant ensuite cette différence par la durée de cet intervalle de temps.

Ainsi, la formule de base $T_V = T_c + a * \frac{dT_c}{dt} - b(\alpha, Vbat)$ est adaptée en : $T_V = T_c + a' * (T_c - T_{cp}) - b(\alpha, Vbat)$

Où $T_{cp}$ est la valeur précédente du capteur de température.

Ici, on trouve b(13.5V, 0.403)=20.2, et a'=20.

La mesure de la température de la carte $T_C$ est effectuée avec un pas de 0,5°C. L'expérience montre alors qu'un pas temporel de 10 secondes est suffisant. Un pas temporel plus petit n'apporte pas plus de précision.

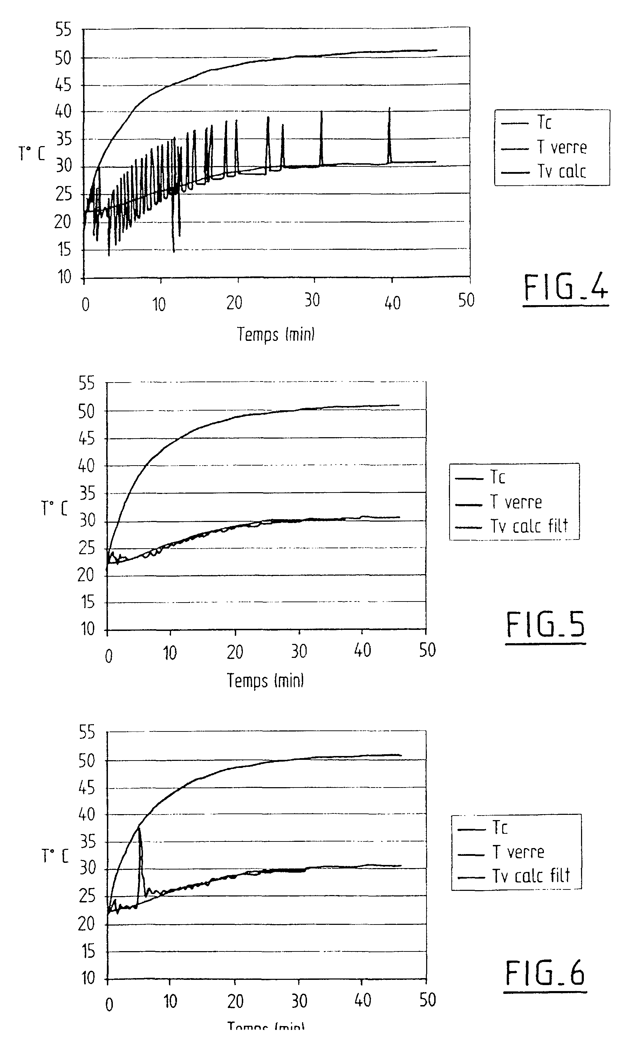

L'imprécision sur $T_C$ génère une imprécision sur la mesure de $\frac{dT_c}{dt}(t)$, ce qui donne, comme représenté sur la figure 4, une valeur brute de $T_V$ calculée qui est assez fluctuante (à comparer avec $T_{verre}$, mesuré directement sur le verre).

Les valeurs obtenues précédemment par calcul sont filtrées par les moyens de calcul de la carte 200, qui appliquent ici un filtre du 1er ordre. Un filtre fait intervenir des valeurs de températures à plusieurs instants, c'est à dire à l'instant considéré ainsi qu'une température de capteur $T_{CP}$ et évaluée $T_{VP}$, correspondant toutes deux à un instant antérieur, ici à l'instant précédant directement l'instant considéré.

Plus précisément, les moyens de calcul déterminent $T_V$ à partir de la formule suivante :

$$T_V = k*[T_C + a*(T_C - T_{cp}) - b(\alpha, V_{bat})] + (1-k)*T_{vp}$$

On choisit un coefficient k qui varie en fonction du temps écoulé depuis le début de l'alimentation de l'afficheur. k est ici égal à :

7/16 pour t=10 et 20s
3/16 pour t=30s à 1 m50s

1/16 pour t>1m50s

Lors de la 1$^{\text{ère}}$ mesure, on fait l'hypothèse $T_V=T_C$, ce qui est vrai s'il s'agit d'un démarrage après une longue période de repos (>20mn) mais qui ne l'est pas dans le cas par exemple d'une réinitialisation après 5 mm de démarrage. C'est pourquoi on choisit le filtrage beaucoup moins fort au départ, c'est à dire qu'on utilise un poids beaucoup plus faible des températures précédentes dans la formule au cours d'une première phase après le démarrage. Ceci permet à la valeur évaluée de converger plus rapidement pendant cette phase, même si c'est au détriment de la stabilité de la mesure.

On remarque en effet que le filtrage ajoute un effet capacitif au modèle. La valeur de a peut être adaptée légèrement pour corriger ce phénomène, ce qui donne dans le cas présent :

a'=18.5 pour t=10s à 1m50s
a'=22 pour t>1m50s

On obtient alors le tracé de la figure 5, qui montre bien la fidélité surprenante obtenue par l'évaluation, par rapport à la température effective du verre.

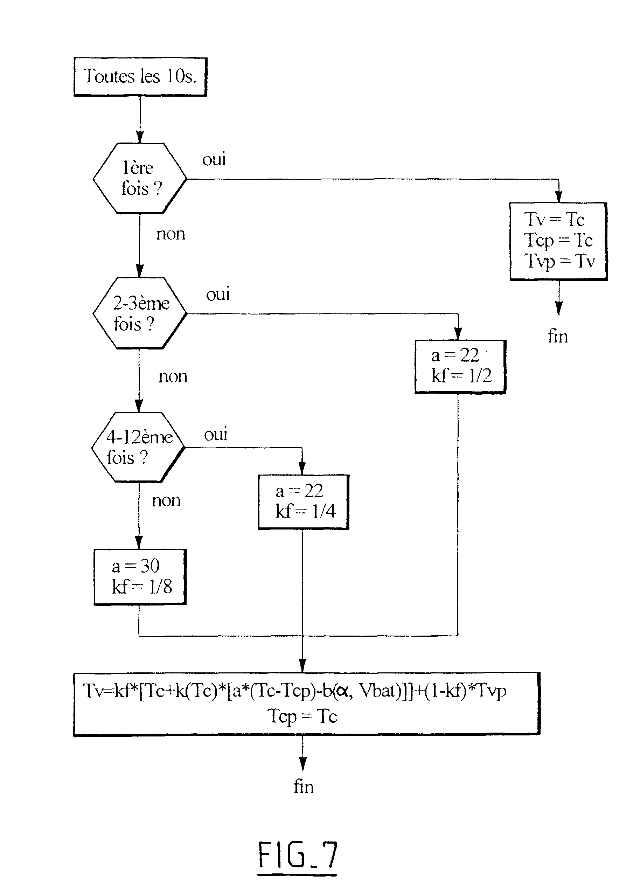

Sur le diagramme de la figure 7, on présente une série de tests effectués toutes les 10 secondes sur le nombre de mesures et d'évaluations effectuées depuis la dernière initialisation de l'afficheur. Selon ce nombre, on adopte des valeurs de a et de k différentes avant d'appliquer la relation précédente aux différentes valeurs de température, de flux d'éclairage $\alpha$ et de tension $V_{bat}$.

On note que quand il s'agit de la première mesure, on a $T_V = T_C$, $T_{CP} = T_C$, et $T_{VP} = T_V$.

On a représenté à la figure 6 le comportement de la température évaluée dans le cas d'une réinitialisation intempestive de l'afficheur.

En moins d'une minute la valeur calculée redevient significative.

Le temps de convergence dans le cas d'une réinitialisation intempestive est ici de l'ordre de 30 secondes. Il peut être amélioré si l'on adopte des moyens plus fins de mesure de la température, par exemple un étage amplificateur après le capteur 210.

Bien entendu, l'invention ne se limite pas à l'exemple détaillé donné ici.

Le dispositif de gestion de l'alimentation de la matrice peut être placé dans le boîtier de l'afficheur comme dans le cas présent, ou en un endroit déporté des autres éléments de l'afficheur.

Par ailleurs, le capteur de température est ici placé sur l'élément formant la source de chaleur dans l'afficheur, à savoir le circuit imprimé 200. Il peut également être placé en un autre endroit déporté du verre de la matrice.

**Revendications**

1. Dispositif de gestion (200) d'alimentation de matrice d'affichage (100) de véhicule automobile, comportant un capteur de température (210) prévu pour être placé de manière espacée par rapport à la matrice ($T_C$), des moyens pour évaluer une température de la matrice ($T_V$) à partir de la température ($T_C$) relevée par ce capteur (210), **caractérisé en ce que** les moyens d'évaluation (200) évaluent la température de la matrice ($T_V$) à partir de la dérivée par rapport au temps de la température ($T_C$) mesurée par le capteur (210).

2. Dispositif de gestion d'alimentation selon la revendication 1, **caractérisé en ce qu'**il inclut des moyens de mesure d'un flux d'éclairage ($\alpha$) de la matrice (100), et **en ce que** les moyens d'évaluation de température (200) évaluent la température ($T_V$) de la matrice (100) également à partir des résultats fournis par les moyens de mesure de ce flux ($\alpha$).

3. Dispositif selon la revendication 1 ou la revendication 2, **caractérisé en ce que** les moyens d'évaluation (200) évaluent la température de la matrice ($T_V$) également à partir d'une tension d'alimentation ($V_{bat}$) fournie en entrée du dispositif de gestion (200).

4. Dispositif selon la revendication 3, **caractérisé en ce que** les moyens d'évaluation (200) évaluent la température de la matrice ($T_V$) à partir d'une relation donnant pour cette température une somme dont un opérande de cette somme est proportionnel au carré de la tension ($V_{bat}$) appliquée à l'entrée du dispositif de gestion (200).

5. Dispositif selon l'une quelconque des revendications 1 à 4, **caractérisé en ce que** les moyens d'évaluation (200) calculent la dérivée de la température ($T_C$) mesurée par le capteur (210), en calculant la différence entre deux températures ($T_C$, $T_{CP}$) relevées par le capteur à deux instants espacés d'un intervalle de temps prédéterminé.

**6.** Dispositif selon l'une quelconque des revendications 1 à 5, **caractérisé en ce que** les moyens d'évaluation de température (200) évaluent la température de la matrice ($T_V$) à partir d'une relation qui fait intervenir une température mesurée par le capteur à un instant donné et une température de matrice ou de capteur respectivement évaluée ou mesurée à un instant antérieur à cet instant donné.

**7.** Dispositif selon la revendication 6, **caractérisé en ce que** la relation fait intervenir ladite température d'un instant antérieur avec une pondération qui est plus faible dans une première phase d'alimentation de la matrice, et plus forte dans une phase postérieure à ladite première phase.

**8.** Dispositif selon l'une quelconque des revendications précédentes, **caractérisé en ce que** les moyens d'évaluation (200) de température évaluent la température ($T_V$) en tenant compte d'une durée écoulée à partir du début de l'alimentation de la matrice.

**9.** Afficheur de véhicule automobile (100, 200, 300) comportant une matrice d'affichage (100) ayant une lisibilité dépendante à la fois de sa température ($T_V$) et d'une grandeur électrique d'alimentation de cette matrice (100), un capteur (210) de température ($T_C$) placé en un endroit (200) espacé de la matrice (100), un dispositif de gestion (200) de l'alimentation électrique de la matrice (100), le dispositif de gestion (200) comportant des moyens (200, 210) pour évaluer la température de la matrice ($T_V$) à partir de la température prélevée par le capteur ($T_C$) , **caractérisé en ce que** ces moyens d'évaluation (200, 210) évaluent la température de la matrice ($T_V$) à partir de la dérivée par rapport au temps de la température ($T_C$) prélevée par le capteur (210).

**10.** Afficheur selon la revendication 9, **caractérisé en ce qu'**il inclut des moyens de mesure d'un flux d'éclairage ($\alpha$) de l'afficheur (100, 200, 300), et **en ce que** les moyens d'évaluation de la température (200) évaluent la température ($T_V$) de la matrice (100) également à partir des résultats fournis par les moyens de mesure du flux d'éclairage ($\alpha$).

**11.** Afficheur selon la revendication 9 ou la revendication 10, **caractérisé en ce que** les moyens d'évaluation (200) évaluent la température de la matrice ($T_V$) également à partir d'une tension d'alimentation ($V_{bat}$) fournie en entrée de l'afficheur (100, 200, 300).

**Patentansprüche**

**1.** Vorrichtung (200) zur Versorgungsregelung einer Kraftfahrzeug-Anzeigematrix (100), die einen Temperatursensor (210) umfaßt, der so ausgelegt ist, daß er von der Matrix ($T_C$) beabstandet angeordnet ist, sowie Mittel zur Bestimmung einer Temperatur der Matrix ($T_V$) ausgehend von der vom Sensor (210) ermittelten Temperatur ($T_C$), **dadurch gekennzeichnet, daß** die Bestimmungsmittel (200) die Temperatur der Matrix ($T_V$) ausgehend von der Ableitung nach der Zeit der vom Sensor (210) gemessenen Temperatur ($T_C$) bestimmen.

**2.** Vorrichtung zur Versorgungsregelung nach Anspruch 1, **dadurch gekennzeichnet, daß** sie Mittel zur Messung eines Beleuchtungsflusses ($\alpha$) der Matrix (100) umfaßt, sowie dadurch, daß die Mittel zur Temperaturbestimmung (200) die Temperatur ($T_V$) der Matrix (100) auch ausgehend von den Ergebnissen bestimmen, die von den Mitteln zur Messung dieses Flusses ($\alpha$) geliefert werden.

**3.** Vorrichtung nach Anspruch 1 oder 2, **dadurch gekennzeichnet, daß** die Bestimmungsmittel (200) die Temperatur der Matrix ($T_V$) auch ausgehend von einer Versorgungsspannung ($V_{bat}$) bestimmen, die am Eingang der Regelungsvorrichtung (200) bereitgestellt wird.

**4.** Vorrichtung nach Anspruch 3, **dadurch gekennzeichnet, daß** die Bestimmungsmittel (200) die Temperatur der Matrix ($T_V$) ausgehend von einer Relation bestimmen, die für diese Temperatur eine Summe angibt, deren einer Operand proportional zum Quadrat der am Eingang der Regelungsvorrichtung (200) angelegten Spannung ($V_{bat}$) ist.

**5.** Vorrichtung nach einem der Ansprüche 1 bis 4, **dadurch gekennzeichnet, daß** die Bestimmungsmittel (200) die Ableitung der vom Sensor (210) gemessenen Temperatur ($T_C$) berechnen, indem sie die Differenz zwischen zwei Temperaturen ($T_C$, $T_{CP}$) berechnen, die vom Sensor zu zwei durch ein vorgegebenes Zeitintervall beabstandeten Zeitpunkten ermittelt werden.

**6.** Vorrichtung nach einem der Ansprüche 1 bis 5, **dadurch gekennzeichnet, daß** die Mittel zur Temperaturbestimmung (200) die Temperatur der Matrix ($T_V$) ausgehend von einer Relation bestimmen, die eine vom Sensor zu einem gegebenen Zeitpunkt gemessene Temperatur verwendet, sowie eine Temperatur der Matrix oder des Sensors, die zu einem bezüglich dem gegebenen Zeitpunkt früher liegenden Zeitpunkt bestimmt beziehungsweise gemessen wird.

7. Vorrichtung nach Anspruch 6, **dadurch gekennzeichnet, daß** die Relation die Temperatur eines früheren Zeitpunkts verwendet, mit einer Gewichtung, die in einer ersten Versorgungsphase der Matrix schwächer ist und in einer bezüglich der ersten Phase späteren Phase stärker ist.

8. Vorrichtung nach einem der vorstehenden Ansprüche, **dadurch gekennzeichnet, daß** die Temperaturbestimmungsmittel (200) die Temperatur ($T_V$) unter Berücksichtigung einer von Beginn der Versorgung der Matrix an verstrichenen Zeitdauer bestimmen.

9. Kraftfahrzeug-Anzeigegerät (100, 200, 300), das eine Anzeigematrix (100) umfaßt, dessen Ablesbarkeit sowohl von seiner Temperatur ($T_V$) als auch von einer elektrischen Versorgungsgröße dieser Matrix (100) abhängt, einen von der Matrix (100) beabstandet angeordneten Temperatur-($T_C$)-Sensor (210), eine Vorrichtung (200) zur Regelung der elektrischen Versorgung der Matrix (100), wobei die Regelungsvorrichtung (200) Mittel (200, 210) zur Bestimmung der Temperatur der Matrix ($T_V$) ausgehend von der vom Sensor ermittelten Temperatur ($T_C$) umfaßt, **dadurch gekennzeichnet, daß** die Bestimmungsmittel (200, 210) die Temperatur der Matrix ($T_V$) ausgehend von der Ableitung nach der Zeit der vom Sensor (210) ermittelten Temperatur ($T_C$) bestimmen.

10. Anzeigegerät nach Anspruch 9, **dadurch gekennzeichnet, daß** es Mittel zur Messung eines Beleuchtungsflusses ($\alpha$) des Anzeigegeräts (100, 200, 300) umfaßt, sowie dadurch, daß die Mittel zur Temperaturbestimmung (200) die Temperatur ($T_V$) der Matrix (100) auch ausgehend von den Ergebnissen bestimmen, die von den Mitteln zur Messung des Beleuchtungsflusses ($\alpha$) geliefert werden.

11. Anzeigegerät nach Anspruch 9 oder 10, **dadurch gekennzeichnet, daß** die Bestimmungsmittel (200) die Temperatur der Matrix ($T_V$) auch ausgehend von einer Versorgungsspannung ($V_{bat}$) bestimmen, die am Eingang des Anzeigegeräts (100, 200, 300) bereitgestellt wird.

**Claims**

1. Motor vehicle display matrix (100) power supply management device (200), comprising a temperature sensor (210) designed to be placed so as to be spaced apart from the matrix ($T_c$), means for evaluating a temperature of the matrix ($T_v$) on the basis of the temperature ($T_c$) read off by this sensor (210), **characterized in that** the evaluating means (200) evaluate the temperature of the matrix ($T_v$) on the basis of the derivative with respect to time of the temperature ($T_c$) measured by the sensor (210).

2. Power supply management device according to Claim 1, **characterized in that** it includes means for measuring an illumination flux ($\alpha$) of the matrix (100), and **in that** the temperature evaluating means (200) evaluate the temperature ($T_v$) of the matrix (100) also on the basis of the results provided by the means for measuring this flux ($\alpha$).

3. Device according to Claim 1 or Claim 2, **characterized in that** the evaluating means (200) evaluate the temperature of the matrix ($T_v$) also on the basis of a supply voltage ($V_{bat}$) provided as input to the management device (200).

4. Device according to Claim 3, **characterized in that** the evaluating means (200) evaluate the temperature of the matrix ($T_v$) on the basis of a relation giving for this temperature a sum of which an operand of this sum is proportional to the square of the voltage ($V_{bat}$) applied to the input of the management device (200).

5. Device according to any one of Claims 1 to 4, **characterized in that** the evaluating means (200) calculate the derivative of the temperature ($T_c$) measured by the sensor (210), by calculating the difference between two temperatures ($T_c$, $T_{cp}$) read off by the sensor at two instants spaced apart by a predetermined time interval.

6. Device according to any one of Claims 1 to 5, **characterized in that** the temperature evaluating means (200) evaluate the temperature of the matrix ($T_v$) on the basis of a relation which involves a temperature measured by the sensor at a given instant and a matrix or sensor temperature respectively evaluated or measured at an earlier instant prior to the given instant.

7. Device according to Claim 6, **characterized in that** the relation involves the said temperature of an earlier instant with a weighting which is lower in a first power supply phase of the matrix, and higher in a posterior phase subsequent to the said first phase.

8. Device according to any one of the preceding claims, **characterized in that** the temperature evaluating means (200) evaluate the temperature $(T_v)$ by taking into account a duration elapsed from the start of the supplying of power to the matrix.

9. Motor vehicle display (100, 200, 300) comprising a display matrix (100) having a readability dependent both on its temperature $(T_v)$ and on a power supply electrical quantity for this matrix (100), a sensor (210) of temperature $(T_c)$ placed at a spot (200) spaced from the matrix (100), a management device (200) for the electrical power supply to the matrix (100), the management device (200) comprising means (200, 210) for evaluating the temperature of the matrix $(T_v)$ on the basis of the temperature read off by the sensor $(T_c)$, **characterized in that** these evaluating means (200, 210) evaluate the temperature of the matrix $(T_v)$ on the basis of the derivative with respect to time of the temperature $(T_c)$ read off by the sensor (210).

10. Display according to Claim 9, **characterized in that** it includes means for measuring an illumination flux $(\alpha)$ of the display (100, 200, 300), and **in that** the temperature evaluating means (200) evaluate the temperature $(T_v)$ of the matrix (100) also on the basis of the results provided by the means for measuring the illumination flux $(\alpha)$.

11. Display according to Claim 9 or Claim 10, **characterized in that** the evaluating means (200) evaluate the temperature of the matrix $(T_v)$ also on the basis of a supply voltage $(V_{bat})$ provided as input to the display (100, 200, 300).

T ambiant

300

T boite

200

210

T verre          100

T ambiant

<u>FIG_1</u>

P3      R3      Tb      R4      Ta

C3

P1      R1      Tv      R2      Ta

Tc

Pc

C1              C2

P(α,Vbat)

<u>FIG_2</u>

Tc      P13     R13     Tv      R24     Ta

Pc

P(α,Vbat)   C1      C23

<u>FIG_3</u>

FIG.4

FIG.5

FIG.6

Toutes les 10s.

1ère fois ? — oui → $Tv = Tc$
$Tcp = Tc$
$Tvp = Tv$

non → fin

2-3ème fois ? — oui → $a = 22$
$kf = 1/2$

non

4-12ème fois ? — oui → $a = 22$
$kf = 1/4$

non → $a = 30$
$kf = 1/8$

$Tv=kf*[Tc+k(Tc)*[a*(Tc-Tcp)-b(\alpha, Vbat)]]+(1-kf)*Tvp$
$Tcp = Tc$

fin

FIG_7